Europäisches Patentamt

European Patent Office

Office européen des brevets

(19)

(11) **EP 0 784 883 B1**

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(21) Anmeldenummer: **96920836.2**

(22) Anmeldetag: **20.06.1996**

(51) Int Cl.6: **H02K 41/03**

(86) Internationale Anmeldenummer:
**PCT/EP96/02684**

(87) Internationale Veröffentlichungsnummer:
**WO 97/05688 (13.02.1997 Gazette 1997/08)**

(54) **SYNCHRON-LINEARMOTOR**

SYNCHRONOUS LINEAR MOTOR

MOTEUR LINEAIRE SYNCHRONE

(84) Benannte Vertragsstaaten:
**AT BE CH DE DK ES FI FR GB IT LI NL PT**

(30) Priorität: **31.07.1995 DE 19528043**

(43) Veröffentlichungstag der Anmeldung:
**23.07.1997 Patentblatt 1997/30**

(73) Patentinhaber: **Krauss-Maffei Aktiengesellschaft
80997 München (DE)**

(72) Erfinder: **STOIBER, Dietmar
D-82031 Grünwald (DE)**

(74) Vertreter: **Rucker, Bernd, Dipl.-Ing.
Mannesmann Demag Krauss-Maffei AG
Patentabteilung -ZR 3-
Krauss-Maffei-Strasse 2
80997 München (DE)**

(56) Entgegenhaltungen:
**US-A- 4 868 431          US-A- 5 166 563**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung bezieht sich auf einen Synchron-Linearmotor gemäß dem Oberbegriff des Patentanspruchs 1. Ein derartiger Synchron-Linearmotor ist aus der US-A-4 868 431 oder aus der US-PS 49 08 533 bekannt.

Hochwertige Synchronmotoren, welche als Stellmotoren eingesetzt werden, sollen eine möglichst gleichmäßige und störungsfreie Kraftentfaltung aufweisen. Bei rotatorischen Synchronmotoren kommt als Ursache für periodische Kraftschwankungen ("Kraftwelligkeit") im wesentlichen die Nutung des Stators in betracht. Zur Kompensation dieser Kraftwelligkeit sowie aller anderen, durch die Nutung hervorgerufenen Auswirkungen auf das Moment an der Antriebswelle werden üblicherweise die Rotor- oder Statorpole über die Weite einer Nut geschrägt.

Auch bei Synchron-Linearmotoren ist es aus der US-A-49 08 533 bekannt, zur Verminderung der Kraftwelligkeit die Pole über die Weite einer Nut des bewickelten Primärteils zu schrägen. Da die Kanten der Stirnflächen des Primärteils bei Draufsicht parallel zu dessen Nuten verlaufen, ergibt sich bei der bekannten Nutschrägung eine Anschrägung an den vorderen und hinteren Stirnkanten der Pole. Eine weitere, aus der EP-A-0 334 645 bekannte Möglichkeit zur Verminderung der Kraftwelligkeit besteht darin, den Kern des primärteils eines Synchron-Linearmotors als ferromagnetische Platte auszubilden un im Luftspalt des Linearmotors Spulen so anzuordnen, daß die Stirnbereiche der Platte über die Luftspaltspulen hinausragen und im Bereich der Mittellängslinie des Linearmotors eine Stufe bilden.

Im Gegensatz zu den rotatorischen Synchronmotoren, die sich, über den Umfang betrachtet, endlos fortsetzen, weist ein Synchron-Linearmotor als besonderes Merkmal einen Anfang und ein Ende auf. An den Übergängen am Anfang und am Ende entstehen bei einem Synchron-Linearmotor periodische Motorendkräfte in Bewegungsrichtung, die sich auf die Bewegung des Linearmotors störend auswirken. Und zwar entstehen die Motorendkräfte deshalb, weil der Linearmotor je nach Motorstellung die magnetischen Pole unterschiedlich überdeckt. Hierbei gibt es Vorzugslagen, in denen die gespeicherte magnetische Energie des Linearmotors besonders groß ist. Es bedarf dann eines zusätzlichen Kraftaufwandes, um den Linearmotors aus solchen Vorzugslagen herauszubewegen. Die Kraft, mit der sich der Linearmotor in die Vorzugslagen der magnetischen Pole zieht, wird als "Polkraft" bezeichnet. Sie beträgt bis zu 20% der Motor-Nennkraft. Über jedem Magnetpol befindet sich eine Vorzugslage. Die Polkraft verläuft daher periodisch zu den Magnetpolen, was zu einer als "Polwelligkeit" bezeichneten Störung der Motorkraft führt. Da die Polkraft nicht vom Motorstrom abhängig ist, stellt sie eine passive Kraft dar, die auch im stromlosen Zustand vorhanden ist. Die Polkraft verrichtet keine Arbeit, da sie abwechseln in Bewegungsrichtung und entgegen der Bewegungsrichtung des Linearmotors wirkt. Im Betrieb addiert sie sich zu der durch den Motorstrom erzeugten Kraft hinzu. Die Polkraft hat nichts gemeinsam mit der Nutkraft, mit welcher die Magnetpolkanten und die Statornuten aufeinander wirken.

Die beschriebene "Polwelligkeit" führt zu einer Bewegungsungenauigkeit der herkömmlichen Synchron-Linearmotoren, was besonders bei Verwendung solcher Motoren als Präzisionssteller unerwünscht ist.

Die Aufgabe der Erfindung besteht demgegenüber darin, bei einem Synchron-Linearmotor der eingangs erwähnten Art die Bewegungsgenauigkeit zu verbessern.

Diese Aufgabe wird erfindungsgemäß durch die kennzeichnenden Merkmale des Patentanspruches 1 gelöst.

Vorteilhafte Ausgestaltungen und Weiterbildungen des erfindungsgemäßen Synchron-Linearmotors ergeben sich aus den Unteransprüchen.

Bei dem erfindungsgemäßen Synchron-Linearmotor sind die beiden Motorenden um die Weite eines Magnetpols geschrägt. Der geschrägte Motorendbereich ist nicht genutet und nicht bewickelt. Im Gegensatz zu bekannten Maßnahmen zur Bekämpfung der Nutkräfte bleibt bei der Erfindung der bewickelte Bereich des Linearmotors völlig unverändert. Infolge der erfindungsgemäßen Schrägung beider Motorenden um die Weite eines magnetischen Pols gibt es zu jedem Polkraftbeitrag an der Vorderseite des Linearmotors exakt einen entgegensetzt gleich großen Polkraftbeitrag an der Rückseite des Linearmotors. Um die Polkräfte vollständig zu kompensieren, ist eine Schrägung der Motorenden über die gesamte Weite eines Magnetpols erforderlich. Wird die Endschrägung kleiner oder größer aufgeführt, so ist die Polkraftkompensation unvollständig. Dies ist der Grund dafür, daß die zur Vermeidung der Nutstörungen eingangs erwähnte Schrägung der Nuten und die damit verbundene, parallele Schrägung der Motorenden um ungefähr eine Nutteilung das Problem der Polwelligkeit nicht beseitigt. Üblicherweise überdecken drei beziehungsweise sechs Nuten den Magnetpol eines Linearmotors, was bei der bekannten Schrägung über eine Nut lediglich einer Schrägung der Motorenden über ein Drittel beziehungsweise ein Sechstel eines Magnetpols entspricht.

Sofern eine Schrägung der Magnetpole des Sekundärteils um die Weite einer Nut des Primärteils zur Kompensation der nutungsbedingten Kraftwelligkeit vorgesehen wird, muß die erfindungsgemäße Schrägung der Strinseiten des Primärteils um die Magnetpolschrägung vergrößert oder verkleinert werden, je nach dem, ob die Magnetpole in der gleichen Richtung geschrägt sind wie die Stirnseiten des Primärteils oder entgegen der Schrägungsrichtung der Primärteilsstirnseiten verläuft.

Die erfindungsgemäß über die Weite eines magnetischen Pols geschrägten Motorendbereiche weisen keine Wicklung auf und brauchen deshalb nicht genutet zu werden. Die beste Wirkung wird erzielt, wenn die Schrägung der Enden des Primärteils zum Sekundärteil hin eine glatte Fläche bildet, welche den gleichen Luftspalt wie der Linearmotor aufweist.

Die Erfindung wird anhand von Ausführungsbeispielen in den Zeichnungen näher erläutert. Es zeigt:

Fig. 1 eine schematische Draufsicht auf ein erstes Ausführungsbeispiel eines erfindungsgemäßen Synchron-Linearmotors;

Fig. 2 eine Draufsicht auf ein zweites Ausführungsbeispiel eines erfindungsgemäßen Synchron-Linearmotors, bei dem gegenüber Fig. 1 die Polspalten seines Sekundärteils abgeschrägt sind;

Fig. 3 eine Draufsicht auf ein drittes Ausführungsbeispiel eines erfindungsgemäßen Synchron-Linearmotors, bei dem gegenüber Fig. 1 die Läufernuten abgeschrägt sind, und

Fig. 4 eine perspektivische Ansicht eines erfindungsgemäß ausgebildeten Vorsatzstückes für das vordere und hintere Ende eines Primärteils.

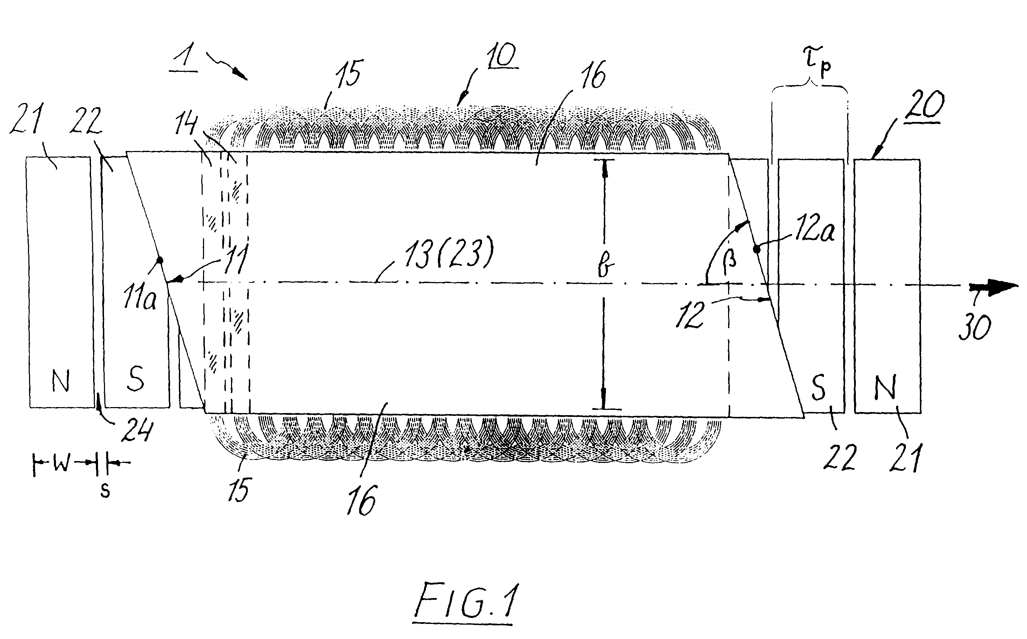

In Fig. 1 ist eine Draufsicht auf einen erfindungsgemäß ausgebildeten Synchron-Linearmotor 1 dargestellt, welcher in üblicher Weise aus einem Primärteil oder Läufer 10 und einem Sekundärteil 20 besteht. Die Bewegungsrichtung des Linearmotors 1 ist mit einem Pfeil 30 angedeutet. Die Länge des Primärteils 10 in Bewegungsrichtung 30 ist kürzer als die Länge des Sekundärteils 20. Der Primärteil 10 umfaßt einen geschichteten Blechkörper 16 mit parallel zueinander verlaufenden Läufernuten 14, von denen in Fig. 1 nur zwei Läufernuten 14 am linken Rand des Blechpaktes 16 gestrichelt angedeutet sind. Die Längsachsen der Läufernuten 14 verlaufen bei dem Ausführungsbeispiel nach Fig. 1 senkrecht zur Längsachse 13 des Primärteils 10. In die Läufernuten 14 ist eine zwei- oder dreiphasige Läuferwicklung 15 eingelegt, welche in nicht gezeigter Weise mit einer zwei- oder dreiphasigen Wechselspannung elektrisch erregt wird.

Der z.B. ortsfeste Sekundärteil besteht aus einer Vielzahl von hintereinander in Bewegungsrichtung 30 angeordneten Dauermagneten mit jeweils einem Nordpol 21 und einem Südpol 22. Zwischen den Polen 21, 22 jedes Polpaares 21/22 mit jeweils der Weite W befindet sich ein schmaler Polspalt 24 mit der Spaltbreite s. Die Längsachsen der Polspalte 24 verlaufen bei dem Ausführungsbeispiel nach Fig. 1 senkrecht zur Längsachse 13 des Primärteils 10 und sind damit in derselben Weise orientiert wie die Längsachsen der Läufernuten 14.

Bei der Erregung der Läuferwicklungen 15 wird eine elektromagnetische Kraft induziert, welche den z.B. unter einem Schlitten befestigten Primärteil 10 in Richtung des Pfeils 30 relativ zum ortsfesten Primärteil 20 bewegt. Die Bewegungsänderung des Primärteils 10 ist dabei synchron bezüglich der Frequenz der zwei- oder dreiphasigen Wechselspannung zur Erregung des Primärteils 10, wovon dieser Linearmotor-Typ die Bezeichnung Synchron-Linearmotor hat.

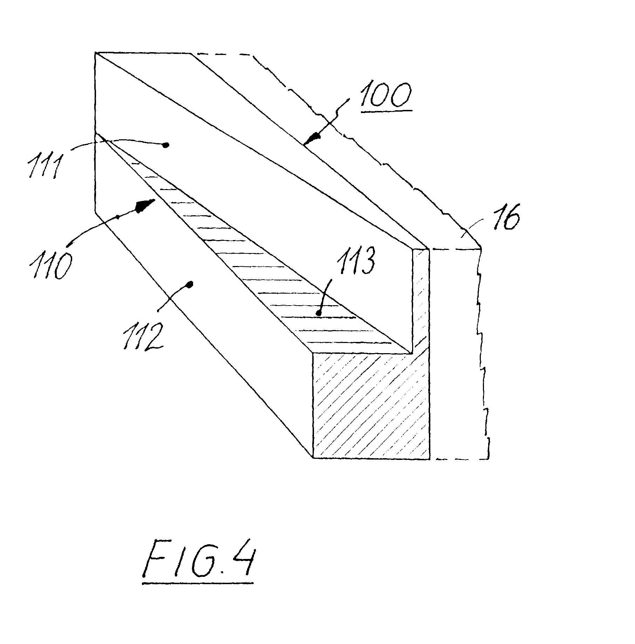

Erfindungsgemäß sind die Stirnbereiche 11, 12 des Blechpaktetes 16 des Primärteils 10 ungenutet ausgebildet und um die Weite W eines Magnetpols 21, 22 unter Ausbildung eines Neigungswinkels β bezüglich der Längsachse 13 geschrägt. Diese Schrägung der Stirnseiten 11, 12 betrifft entweder, wie in Fig. 1 dargestellt ist, die gesamten Stirnflächen 11a, 12a oder nur einen Abschnitt hiervon, wie anhand eines Vorsatzstücks 100 in Fig. 4 gezeigt ist. Das ungenutete Vorsatzstück 100 wird an jedes axiale Ende des Blechkörpers 16 angebracht, wodurch der Blechkörper 16 in herkömmlicher Weise mit Nuten 14 und Wicklungen 15 gefertigt werden kann. Jedes Vorsatzstück 100 ist senkrecht zur Luftspaltfläche zwischen Primärteil 10 und Sekundärteil 20 geblecht, wobei die Orientierung der Blechschichtung vorzugsweise mit der Orientierung des Blechkörpers 16 übereinstimmt. Bei dem Ausführungsbeispiel nach Fig. 4 weist die Stirnfläche 110 einen abgeschrägten Flächenabschnitt 111 und einen nicht-abgeschrägten, geraden Flächenabschnitt 112 auf, wobei zwischen den Abschnitten 111 und 112 eine horizontale Stufe 113 mit dreieckförmigem Grundriß vorhanden ist. Die Höhe des abgeschrägten Flächenabschnitts 111 ist beispielsweise größer als das Fünffache der Höhe des Luftspaltes zwischen Primärteil 10 und Sekundärteil 20. Durch eine solche teilweise Schrägung der Stirnflächen 11a, 12a (die nicht nur bei Vorsatzstücken 100, sondern auch bei einstückiger Ausbildung des Blechkörpers 16 vorgesehen werden kann) läßt sich die mechanische Festigkeit der geblechten Vorsatzstücke 100 vergrößern. Die Vorsatzstücke 100 lassen sich so ausbilden, daß sie unmittelbar an die Enden des rechteckförmigen Blechpaketes 16 angeschraubt werden können. Ferner lassen sich die Vorsatzstücke 100 an demselben (nicht gezeigten) Maschinenbauteil befestigen, an welchem auch das Blechpaket 16 befestigt ist. In diesem Falle werden die (nicht gezeigten) Befestigungsbohrungen für das Blechpaket 16 bis zu den Vorsatzstücken 100 verlängert.

Im Falle einer einstückigen Ausbildung der Enden des Blechpaketes 16 können die einzelnen Kernbleche des genuteten Blechpaketes 16 einen unterschiedlich langen, ungenuteten Überstand aufweisen. Nach dem Zusammenfügen der Einzelbleche zu dem Blechpaket 16 entstehen aus den unterschiedlich langen Überständen die geschrägten Enden des Primärteils 10. Falls eine individuelle Ablängung der Einzelbleche zur Erzielung eines geschrägten Endes des Primärteils 10 fertigungstechnisch zu aufwendig ist, läßt sich die Schrägung auch mittels Fräsen des fertigen Blechkörpers 16 herstellen. Hierbei ist es wiederum ausreichend, wenn die Schrägung nur über einen Teil der Höhe des Blechpaktes 16 verläuft, wie dies in Fig. 4 für die Vorsatzstücke 100 gezeigt ist.

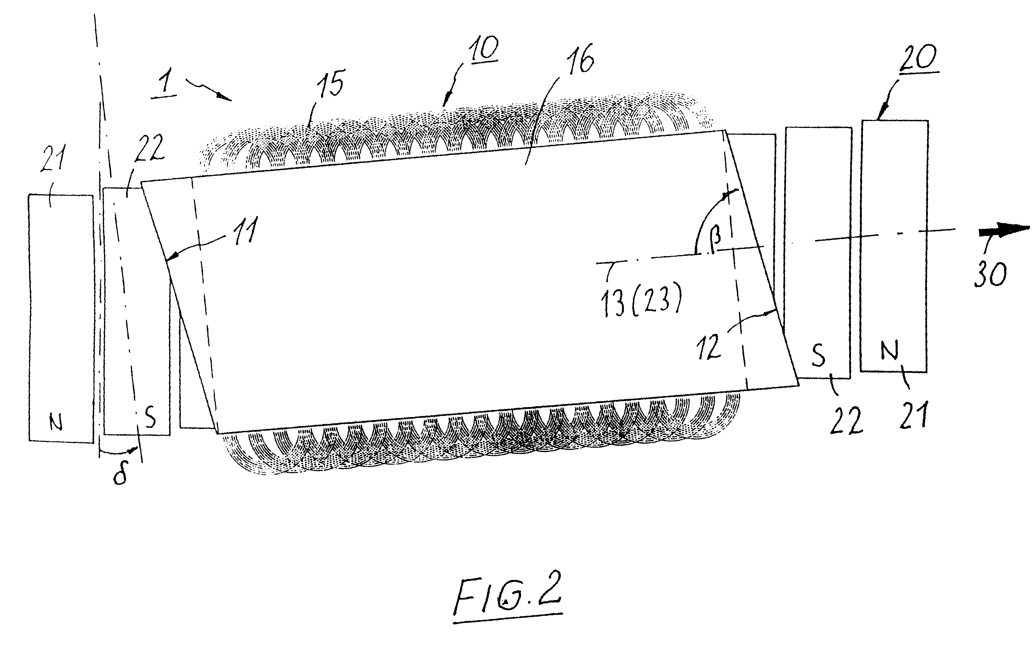

Bei dem in Fig. 2 dargestellten weiteren Ausführungsbeispiel des erfindungsgemäßen Synchron-Linearmotors sind die Magnetpole 21, 22 des Sekundärteils 20 zur Kompensation der nutungsbedingten Kraftwelligkeit unter einem Winkel õ gegen die Senkrechte zur Bewegungsrichtung 30 geschrägt. Diese Schrägung der Magnetpole 21, 22 kann, wie in Fig. 2 gezeigt ist, in Richtung der Schrägung der Stirnseiten 11, 12 des Primärteils 10 erfolgen. Ebensogut ist aber auch in nicht gezeigter Weise eine Schrägung der Magnetpole 21, 22 entgegen der Richtung der Schrägung der Stirnseiten 11, 12 des Primärteils 10 möglich. Im Falle einer Anschrägung der Magnetpole 21, 22 um õ in Schrägungsrichtung der Stirnseiten 11, 12 wird der Neigungswinkel β der Stirnseiten 11, 12 um den Schrägungswinkel õ der Magnetpole 21, 22 vergrößert; im Falle einer Anschrägung der Magnetpole 21, 22 entgegen der Schrägungsrichtung der Stirnseiten 11, 12 wird der Neigungswinkel β der Stirnseiten 11, 12 um den Schrägungswinkel õ verkleinert. Für den Neigungswinkel β der Stirnseiten 11, 12 des Primärteils 10 gilt bei Schrägung der Magnetpole 21, 22 des Sekundärteils 20 um einen Winkel õ folgende Beziehung:

$$\beta = \arctan (b/\tau_p) \pm \tilde{o}$$

wobei

β    der Neigungswinkel der abgeschrägten Flächen 11a, 12a an den vorderen und hinteren Stirnbereichen 11, 12 des Primärteils 10,

b    die elektrisch aktive Breite des Primärteils 10,

$\tau_p$    die Polteilung der Pole 21, 22 des Sekundärteils 20, und

õ    der Schrägungswinkel der Magnetpole 21, 22 des Sekundärteils (20), der bei Schrägung der Magnetpole 21, 22 in Richtung der Schrägung der Stirnseiten 11, 12 des Primärteils 10 mit positivem Vorzeichen und bei Schrägung der Magnetpole 21, 22 gegen die Richtung der Schrägung der Stirnseiten 11, 12 des Primärteils 10 mit negativem Vorzeichen in die obige Gleichung eingesetzt wird,

bedeuten.

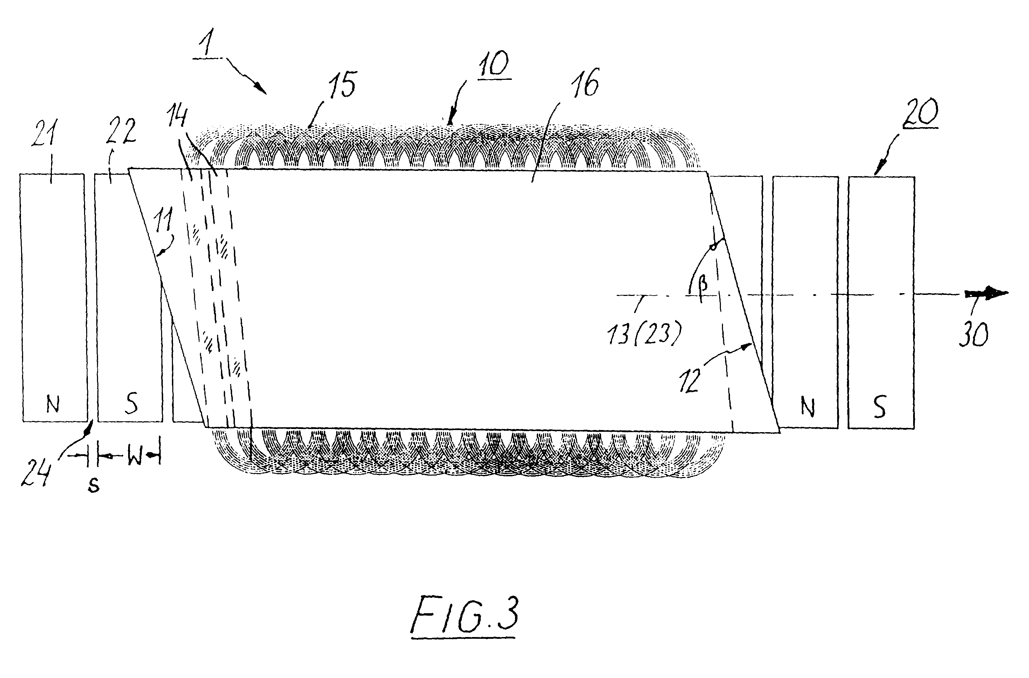

Es versteht sich, daß die Schrägung der Längsachsen der Läufernuten 14 gemäß Fig. 2 und der Polspalte 24 gemäß Fig. 3 auch gemeinsam angewandt werden kann Des weiteren ist es möglich, anstelle einer Schrägung der Polspalte 24 oder zusätzlich zu einer solchen Schrägung die Spaltbreite s nicht konstant zu halten (wie dies in den Fign. 1 bis 3 der Fall ist), sondern stetig zu verändern, so daß die Polspalte 24 konisch verlaufen.

**Patentansprüche**

1.  Synchron-Linearmotor (1), mit einem Primärteil (10) und einem Sekundärteil (20), dessen Länge in Bewegungsrichtung (30) des Linearmotors (1) größer als die Länge des Primärteils (10) ist, wobei das Primärteil (10) Läufernuten (14) zur Aufnahme einer ein- oder mehrphasigen Läuferwicklung (15) aufweist und das Sekundärteil (20) aus einer Folge von Permanentmagneten mit jeweils zwei als Nord- und Südpol wirkenden Polpaaren (21, 22) besteht, **dadurch gekennzeichnet,** daß die vorderen und hinteren Stirnbereiche (11, 12) des Primärteils (10) ungenutet und unbewickelt sowie zumindest abschnittsweise derart abgeschrägt sind, daß der Neigungswinkel (β) der senkrecht zur Luftspaltfläche verlaufenden, abgeschrägten Flächen (11a, 12a) an den vorderen und hinteren Stirnbereichen (11, 12) des Primärteils (10) bezüglich der Motorlängsachse (13) entsprechend folgender Beziehung gewählt ist:

$$\beta = \arctan (b/\tau_p),$$

wobei

β    der Neigungswinkel der abgeschrägten Flächen (11a, 12a) an den vorderen und hinteren Stirnbereichen (11, 12) des Primärteils (10),

b    die elektrisch aktive Breite des Primärteils (10), und

$\tau_p$    die Polteilung der Pole (21, 22) des Sekundärteils (20)

bedeuten.

2.  Synchron-Linearmotor nach Anspruch 1, **dadurch gekennzeichnet,** daß die Läufernuten (14) des Primärteils (10) gegenüber dessen Längsachse (13) einen von 90° verschiedenen Neigungswinkel aufweisen.

3.  Synchron-Linearmotor nach Anspruch 1, **dadurch gekennzeichnet,** daß die Läufernuten (14) des Primärteils (10) senkrecht zu dessen Längsachse (13) orientiert sind.

4.  Synchron-Linearmotor nach Anspruch 1, 2 oder 3, **dadurch gekennzeichnet,** daß die Polspalte (24) zwischen jeweils einem Polpaar (21, 22) des Sekundärteils (20) gegenüber dessen Längsachse (23) einen von 90° verschiedenen Neigungswinkel aufweisen.

5. Synchron-Linearmotor nach einem der Ansprüche 1 bis 4, **dadurch gekennzeichnet,** daß der Neigungswinkel (β) der Stirnseiten (11, 12) des Primärteils (10) bei Schrägung der Magnetpole (21, 22) des Sekundärteils (20) um einen Winkel õ gemäß folgender Beziehung gewählt ist:

$$\beta = \arctan (b/\tau_p) \pm \tilde{o}$$

wobei

β   der Neigungswinkel der abgeschrägten Flächen (11a, 12a) an den vorderen und hinteren Stirnbereichen (11, 12) des Primärteils (10),

b   die elektrisch aktive Breite des Primärteils (10),

$\tau_p$   die Polteilung der Pole (21, 22) des Sekundärteils (20), und

õ   der Schrägungswinkel der Magnetpole (21, 22) des Sekundärteils (20), der bei Schrägung der Magnetpole (21, 22) in Richtung der Schrägung der Stirnseiten (11, 12) des Primärteils (10) mit positivem Vorzeichen und bei Schrägung der Magnetpole (21, 22) gegen die Richtung der Schrägung der Stirnseiten (11, 12) des Primärteils (10) mit negativem Vorzeichen in die obige Gleichung eingesetzt wird,

bedeuten.

6. Synchron-Linearmotor nach einem der Ansprüche 1 bis 5, **dadurch gekennzeichnet,** daß die Polspalte (24) zwischen jeweils einem Polpaar (21, 22) des Sekundärteils (20) eine sich verändernde Spaltbreite (s) aufweisen.

7. Synchron-Linearmotor nach einem der Ansprüche 1 bis 6, **dadurch gekennzeichnet,** daß die Polspalte (24) zwischen jeweils einem Polpaar (21, 22) des Sekundärteils (20) senkrecht zu dessen Längsachse (23) orientiert sind.

8. Synchron-Linearmotor nach einem der Ansprüche 1 bis 7, **dadurch gekennzeichnet,** daß Vorsatzstücke (100) aus magnetisch leitfähigem Material für das vordere und hintere Ende des Primärteils (10) vorgesehen sind und daß die freie Stirnseite (110) jedes Vorsatzstückes (100) wenigstens eine abgeschrägte Fläche (111) aufweist.

9. Synchron-Linearmotor nach Anspruch 8, **dadurch gekennzeichnet,** daß die Vorsatzstücke (100) aus senkrecht zur Bewegungsrichtung (Pfeil 30) des Linearmotors (1) gerichteten, ferromagnetischen Blechen aufgebaut sind.

**Claims**

1. Synchronous linear motor (1) with a primary part (10) and a secondary part (20) of which the length in the direction of movement (30) of the linear motor (1) is greater than the length of the primary part (10), wherein the primary part (10) comprises rotor grooves (14) for receiving a single- or multiphase rotor winding (15) and the secondary part (20) consists of a sequence of permanent magnets with two respective pairs of poles (21, 22) acting as north and south pole, characterised in that the front and back end regions (11, 12) of the primary part (10) are ungrooved and unwound and are bevelled at least in certain regions in such a way that the angle of inclination (β) of the bevelled faces (11a, 12a) extending perpendicularly to the air gap face at the front and rear end regions (11, 12) of the primary part (10), with respect to the longitudinal axis (13) of the motor, is selected according to the following equation:

$$\beta = \arctan (b/\tau_p),$$

wherein

β   represents the angle of inclination of the bevelled faces (11a, 12a) at the front and back end regions (11, 12) of the primary part (10),

b   represents the electrically active width of the primary part (10), and

$\tau_p$   represents the pole pitch of the poles (21, 22) of the secondary part (20).

2. Synchronous linear motor according to claim 1, characterised in that the rotor grooves (14) of the primary part (10) are at an angle of inclination, other than 90°, to the longitudinal axis (13) thereof.

3. Synchronous linear motor according to claim 1, characterised in that the rotor grooves (14) of the primary part (10) are orientated perpendicularly to the longitudinal axis (13) thereof.

4. Synchronous linear motor according to claim 1, 2 or 3, characterised in that the pole gaps (24) between a respective pair of poles (21, 22) of the secondary part (20) are at an angle of inclination, other than 90°, to the longitudinal axis (23) thereof.

5. Synchronous linear motor according to one of claims 1 to 4, characterised in that the angle of inclination ($\beta$) of the end faces (11, 12) of the primary part (10) with skewing of the magnetic poles (21, 22) of the secondary part (20), is selected at an angle $\tilde{o}$ according to the following equation:

$$\beta = \arctan (b/\tau_p) \pm \tilde{o}$$

wherein

$\beta$      represents the angle of inclination of the bevelled faces (11a, 12a) at the front and back end regions (11, 12) of the primary part (10),

b      represents the electrically active width of the primary part (10),

$\tau_p$      represents the pole pitch of the poles (21, 22) of the secondary part (20), and

$\tilde{o}$      represents the angle of skew of the magnetic poles (21, 22) of the secondary part (20) which is inserted into the foregoing equation with a positive sign with skewing of the magnetic poles (21, 22) in the direction of the skewing of the end faces (11, 12) of the primary part (10) and with a negative sign with skewing of the magnetic poles (21, 22) against the direction of the skewing of the end faces (11, 12) of the primary part (10).

6. Synchronous linear motor according to one of claims 1 to 5, characterised in that the pole gaps (24) between a respective pair of poles (21, 22) of the secondary part (20) have a varying gap width (s).

7. Synchronous linear motor according to one of claims 1 to 6, characterised in that the pole gaps (24) between a respective pair of poles (21, 22) of the secondary part (20) are orientated perpendicularly to the longitudinal axis (23) thereof.

8. Synchronous linear motor according to one of claims 1 to 7, characterised in that attachments (100) made of magnetically conductive material are provided for the front and back end of the primary part (10) and that the free end face (110) of each attachment (100) comprises at least one bevelled face (111).

9. Synchronous linear motor according to claim 8, characterised in that the attachments (100) are made up of ferromagnetic metal sheets directed perpendicularly to the direction of movement (arrow 30) of the linear motor (1).

## Revendications

1. Moteur linéaire synchrone (1) comportant une partie primaire (10) et une partie secondaire (20) dont la longueur, selon la direction du mouvement (30) du moteur linéaire (1), est supérieure à la longueur de la partie primaire (10), dans le cas duquel la partie primaire (10) présente des encoches d'induit (14) pour recevoir un bobinage d'induit (15) monophasé ou polyphasé et la partie secondaire (20) est constituée d'une suite d'aimants permanents avec chacun deux paires de pôles (21, 22) agissant comme pôle Nord et pôle Sud, caractérisé par le fait que les zones frontales avant et arrière (11, 12) de la partie primaire (10) ne comportent ni encoche ni bobinage et sont, au moins par portions, découpées obliquement de façon que l'angle d'inclinaison ($\beta$) des surfaces découpées obliquement, (11a, 12a) orientées perpendiculairement par rapport à la surface d'entrefer, aux zones frontales avant et arrière (11, 12) de la partie première (10) soit, par rapport à l'axe longitudinal (13) du moteur, choisi selon la relation suivante :

$$\beta = \arctan (b/\tau_p)$$

avec

$\beta$      angle d'inclinaison des surfaces inclinées (11a), (12a) sur les zones frontales avant et arrière (11), (12) de la partie primaire 10,

b      largeur électriquement active de la partie primaire (10) et

$\tau p$      pas polaire des pôles (21), (22) de la partie secondaire (20),

2. Moteur linéaire synchrone selon la revendication 1, caractérisé par le fait que les encoches d'induit (14) de la partie primaire (10) présentent par rapport à leur axe longitudinal (13), un angle d'inclinaison différent de 90°.

3. Moteur linéaire synchrone selon la revendication 1, caractérisé par le fait que les encoches d'induit (14) de la partie primaire (10) sont orientées perpendiculairement à son axe longitudinal (13).

4. Moteur linéaire synchrone selon les revendications 1, 2 ou 3, caractérisé par le fait que les fentes (24) entre chaque paire de pôles (21, 22) de la partie secondaire (20) présentent, par rapport à son axe longitudinal (23), un angle d'inclinaison différent de 90°.

5. Moteur linéaire synchrone selon l'une des revendications 1, à 4, caractérisé par le fait que en cas d'inclinaison des pôles magnétiques (21, 22) de la partie secondaire (20) d'un angle (δ), on choisit l'angle d'inclinaison (β) des faces frontales (11, 12) de la partie primaire (10) selon la relation suivante :

$$\beta = \arctan (b/\tau_p) \pm \delta$$

avec

β     angle d'inclinaison des surfaces inclinées 11a, 12a sur les zones frontales avant et arrière 11, 12 de la partie primaire 10,

b     largeur électriquement active de la partie primaire 10

$\tau_p$     pas polaire des pôles 21, 22 de la partie secondaire 20, et

δ     angle d'inclinaison des pôles magnétiques 21, 22 de la partie secondaire 20, qui s'emploie dans l'équation ci-dessus, dans le cas d'une inclinaison des pôles magnétiques 21, 22 en direction de l'inclinaison des faces frontales 11, 12 de la partie primaire 10, avec un signe positif et, dans le cas d'une inclinaison des pôles magnétiques 21, 22 à l'encontre de la direction de l'inclinaison des faces frontales 11, 12 de la partie primaire 10, avec un signe négatif.

6. Moteur linéaire synchrone selon l'une des revendications 1, à 5, caractérisé par le fait que les fentes (24) entre chaque paire de pôles (21, 22) de la partie secondaire (20) présentent une largeur de fente (s) variable.

7. Moteur linéaire synchrone selon l'une des revendications 1, à 6, caractérisé par le fait que les fentes (24) entre chaque paire de pôles (21, 22) de la partie secondaire (20) sont orientées perpendiculairement à son axe longitudinal (23).

8. Moteur linéaire synchrone selon l'une des revendications 1, à 7, caractérisé par le fait que sont prévus des adaptateurs (100) en un matériau magnétiquement conducteur pour l'extrémité avant et arrière de la partie primaire (10) et que la face frontale libre (110) de chaque adaptateur (100) présente au moins une surface (111) découpée obliquement.

9. Moteur linéaire synchrone selon la revendication 8, caractérisé par le fait que les adaptateurs (100) sont constitués de tôles ferromagnétiques orientées perpendiculairement à la direction du mouvement (flèche 30) du moteur linéaire (1).

_FIG.1_

EP 0 784 883 B1

FIG. 2

FIG.3

EP 0 784 883 B1

*FIG.4*

EP 0 784 883 B1